# EUROPÄISCHE PATENTSCHRIFT

(11) **EP 2 526 310 B1**
(45) Veröffentlichungstag und Bekanntmachung des Hinweises auf die Patenterteilung: **09.10.2013**
(21) Anmeldenummer: 10702597.5
(22) Anmeldetag: 22.01.2010
(51) Int. Cl.: F16C 17/14, F16C 43/02, F16B 11/00, F16D 1/068

(54) **VERFAHREN ZUR HERSTELLUNG EINES GLEITLAGERS MIT EINER HART-/WEICHPAARUNG**
METHOD FOR PRODUCING A PLAIN BEARING HAVING A HARD/SOFT PAIRING
PROCÉDÉ DE PRODUCTION D'UN PALIER LISSE DOTÉ D'UN APPARIEMENT DUR/SOUPLE

(43) Veröffentlichungstag der Anmeldung: 28.11.2012
(73) Patentinhaber: Voith Patent GmbH, 89522 Heidenheim (DE)
(72) Erfinder: HOLSTEIN, Benjamin, 89520 Heidenheim (DE); PERNER, Norman, 89233 Neu-Ulm (DE); SPIEGEL, Klaus, 40627 Düsseldorf (DE)
(74) Vertreter: Dr. Weitzel & Partner
(86) Internationale Anmeldenummer: PCT/EP2010/000381
(87) Internationale Veröffentlichungsnummer: WO 2011/088847

(56) Entgegenhaltungen:
- DE-A1- 19 526 497
- DE-A1-102007 052 574
- DE-A1-102008 006 899
- FR-A1- 2 442 371
- US-A- 6 024 494
- US-A1- 2005 089 434

## Beschreibung

Die Erfindung betrifft ein Verfahren zur Herstellung eines Gleitlagers mit einer Hart-/Weichpaarung für die Gleitflächen, insbesondere zur Ausbildung der Axial- und/oder Radiallagerung der umlaufenden Einheit eines Unterwasserkraftwerks.

Ein Unterwasserkraftwerk zur Ausnutzung einer Gezeiten- oder Gewässerströmung, das als tauchende, freistehende Anlage angelegt ist, sollte insbesondere für einen schwer zugänglichen Installationsort eine hohe Standfestigkeit ausweisen, um Servicemaßnahmen möglichst weitgehend zu vermeiden. Dabei stellte die Lagerung einer umlaufenden Einheit mit einer typischerweise propellerförmig angelegten Wasserturbine und einem Wellenstutzen eine die Lebensdauer der Gesamtanlage wesentliche beeinflussende Komponente dar.

Eine Möglichkeit, ein Lager mit der gewünschten Standfestigkeit auch für Betriebsbedingungen auszubilden, für die ein Sedimenteintrag in die Lager nicht gänzlich ausgeschlossen werden kann, besteht in der Verwendung wassergeschmierter Gleitlager, die beispielsweise als Stevenrohrlager für Schiffe bekannt sind. Derartige Lager weisen Gleitflächen auf, die einen deutlichen Unterschied in der Materialhärte und Duktilität zeigen. Für eine solche Hart-/Weichpaarung kann beispielsweise eine Vielzahl von Gleitschuhen mit einer Gleitfläche aus einem Polymermaterial, beispielsweise Orkot®, zur Ausbildung der ersten Gleitlagerschale verwendet werden. Die Gegenlauffläche der zweiten Gleitlagerschale besteht typischerweise aus einem Stahlteil. Derartige Gleitlager zeigen bei einer hinreichenden Zufuhr von Wasser als Schmiermittel auch beim Eintrag abrasiver Materialien, wie Sandkörnern und dergleichen, nur einen geringen Verschleiß.

Nachteilig an einem gattungsgemäßen Lager ist der fertigungstechnische Aufwand im Fall großer Baugrößen, wie sie für Unterwasserkraftwerke mit Lagerdimensionen im Meterbereich vorliegen. Dabei ist insbesondere die durchgehende Gleitfläche mit der höheren Härte präzise zu fertigen. Dies ist insbesondere dann aufwändig, wenn beispielsweise für Unterwasserkraftwerke mehrere Gleitlager zur Abstützung radialer und axialer Lasten vorgesehen sind, die relativ zueinander präzise zu justieren sind.

Die typischerweise durchgehend ausgebildeten Gleitflächen höherer Härte gattungsgemäßer Gleitlager verlangen meist einen aufwändigen Herstellungsprozess, beispielsweise durch mechanische Bearbeitungsschritte wie Fräsen und Nachschleifen. Dies ist insbesondere dann mit einem hohen Fertigungsaufwand verbunden, wenn derartige Laufflächen in eine großbauende, an einem Stück vorliegende umlaufende Einheit eines Unterwasserkraftwerks eingearbeitet werden müssen. Darüber hinaus können solchermaßen angelegte Gleitflächen nur schwerlich nach einer gewissen Laufzeit der Anlage ausgebessert werden. Vielfach ist es unvermeidlich, die gesamte Anlage zu demontieren und den Wellenstutzen der umlaufenden Einheit als Ganzes nachzuarbeiten oder zu ersetzen.

FR 2 442 371 A1 offenbart ein Ablaufelement, das durch elastische O-Ringe auf einer Welle abgestützt wird. Des Weiteren ist aus der DE 10 2007 052 574 A1 eine Fixierung eines Lagerinnenrings eines Kugellagers auf einer Welle mit Hilfe eines Klebstoffs bekannt, der bei der Montage zunächst keine adhäsiven Eigenschaften aufweist und nachfolgend zur Ausführung der Fixierung aktiviert wird. Dabei kann es sich um einen Heißkleber handeln.

Der Erfindung liegt die Aufgabe zugrunde, ein Verfahren zur Herstellung eines gattungsgemäßen Gleitlagers bereit zu stellen, dass dessen Montage und Justage vereinfacht ist. Darüber hinaus sollte eine Möglichkeit zur Ausbesserung einzelner Gleitflächen im Servicefall gegeben sein. Zusätzlich sollten Gleitflächen aus Materialien ausgebildet werden, die auch unter harschen Umgebungsbedingungen für ein Unterwasserkraftwerk, insbesondere an einem Standort im Meer, im Wesentlichen wartungsfrei sind.

Die Erfindung wird durch die Merkmale des unabhängigen Anspruchs gelöst. Vorteilhafte Ausgestaltungen ergeben sich aus den Unteransprüchen.

Dabei wird ein Verfahren zur Herstellung gattungsgemäßen Gleitlages insbesondere für Unterwasserkraftwerke, herangezogen, das eine erste Gleitlagerschale mit wenigstens einem und vorzugsweise mit mehreren Gleitlagersegmenten und eine zweite Gleitlagerschale mit einem Ablaufelement umfasst. Für ein solches Gleitlager wird nunmehr die Verwendung eines separaten Ablaufelements vorgeschlagen, das die Gleitfläche höherer Härte bildet und welches über eine Zwischenschicht von einem Tragkörper abgestützt wird.

Die separate Ausbildung eines Ablaufelements erlaubt die Herstellung sowie den späteren Austausch einzelner Gleitflächen einer Anlage. Demgemäß ist es zur Ausbildung von Radiallagern möglich, anstatt eine Gleitfläche in eine Welle einzufräsen, einen Laufring zu verwenden, der von der Welle als Tragkörper abgestützt wird. Entsprechend kann einer Spurscheibe zur Abstützung axialer Kräfte als Ablaufelement ein Laufring zugeordnet werden. Des Weiteren ergibt sich bei einer separaten Ausbildung eines Ablaufelements der Vorteil, ein Bauteil mit verringerter Baugröße handhaben zu können, sodass Beschichtungsverfahren vereinfacht werden. Darüber hinaus kann ein Material hoher Härte, jedoch mit einer gewissen Sprödheit, verwendet werden, da der Tragkörper das Ablaufelement rückseitig abstützt. Hierdurch ist es möglich, Ablaufelemente wenigstens teilweise aus einem keramischen oder glasartigen Material auszubilden oder derartige Beschichtungen zu verwenden.

Erfindungsgemäß wird zwischen dem Ablaufelement und dem Tragkörper eine Zwischenschicht vorgesehen, die eine gewisse plastische Verformbarkeit aufweist. Dabei wird insbesondere bevorzugt, den Grad der plastischen Verformbarkeit gezielt einstellen zu können. Hierfür kommt insbesondere ein Material in Frage, das im Einbauzustand zunächst plastisch ist und dann in einem weiteren Prozessschritt zu einem Material mit einer geringeren Duktilität umgewandelt werden kann. Besonders bevorzugt wird zu diesem Zweck eine bestimmte Temperaturführung vorgegeben.

Dabei ist es denkbar, die Zwischenschicht aus einem Thermoplast oder aus einem Schmelzklebstoff herzustellen. Ein Thermoplast kann in einen Temperaturbereich überführt werden, für den eine hinreichende plastische Verformbarkeit vorliegt. Werden Schmelzklebstoffe verwendet, wird bei der Erstmontage oder Justage des Ablaufelements entsprechend eine Erwärmung über den Schmelzpunkt vorgenommen. Mit absinkender Temperatur verringert sich die plastische Verformbarkeit der Zwischenschicht, sodass für die beim Betrieb des Gleitlagers auftretenden Lagertemperaturen eine sichere Abstützung des Ablaufelements am Tragkörper sichergestellt ist. Es wird jedoch bevorzugt, einen gewissen Rest an plastischer Verformbarkeit der Zwischenschicht auch für den Normalbetrieb beizubehalten, um im Fall ungewöhnlich hoher Flächenpresskräfte im Lager ein gewisses Maß an Nachstellfähigkeit im Sinne einer selbsttätigen Einstellbarkeit beizubehalten.

Nachfolgend wird die Erfindung anhand von Ausführungsbeispielen und Figurenskizzen genauer erläutert, in denen im Einzelnen Folgendes dargestellt ist:
- Figur 1: zeigt einen Teil einer Schnittansicht eines erfindungsgemäßen Gleitlagers zur Abstützung axialer Kräfte an einer Spurscheibe.
- Figur 2: zeigt in einer Schnittansicht einen Ausschnitt eines erfindungsgemäßen Gleitlagers zur radialen Abstützung.
- Figur 3: zeigt in einer Teilschnittansicht ein Unterwasserkraftwerk mit erfindungsgemäß ausgebildeten Gleitlagern.

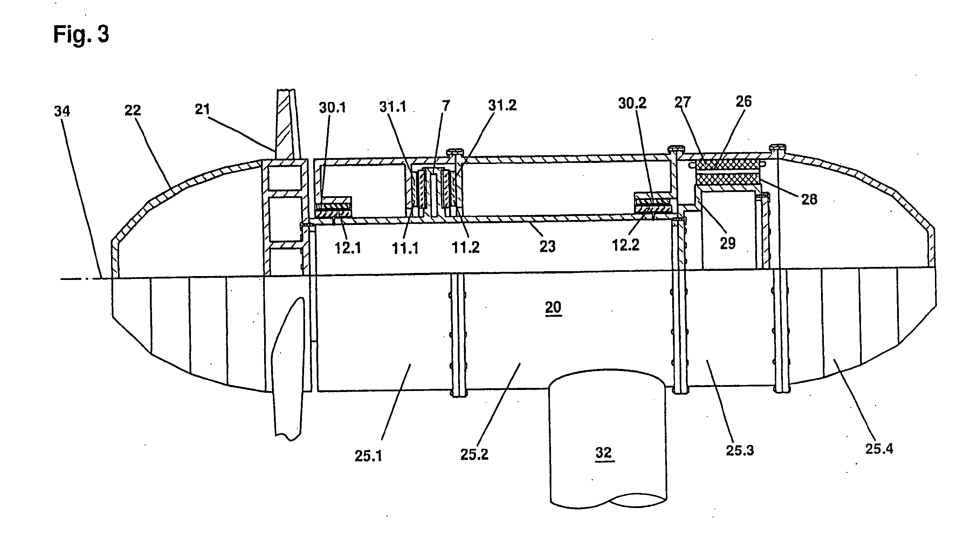

Figur 3 zeigt ein schematisch vereinfacht dargestelltes, in Teilschnittansicht gezeigtes Unterwasserkraftwerk 20, dessen umlaufende Einheit eine Wasserturbine 21, eine Haube 22, einen Wellenstutzen 23 und einen daran anschließenden Wellenteil 29 zur Abstützung des Läufers 28 des elektrischen Generators 26 umfasst. Diese umlaufende Einheit wird durch zwei Radiallager 30.1, 30.2 in radialer Richtung sowie mittels der Axiallager 31.1, 31.2 axial an einer Spurscheibe 7 abgestützt. Diese Lager sind als wassergeschmierte Gleitlager angelegt und weisen jeweils ein erfindungsgemäßes Ablaufelement mit einer Abstützung über eine Zwischenschicht an einem Tragkörper auf. Dies wird nachfolgend noch genauer erläutert. Jedes der Gleitlager umfasst eine segmentiert angelegte erste Gleitlagerschale, wobei die hierzu verwendeten Gleitlagersegmente eine Gleitfläche aus einem Polymermaterial aufweisen. Die Gleitlagersegmente sind ferner einstellbar an einem ersten Segment 25.1 sowie an einem zweiten Segment 25.2 des feststehenden Gehäuseteils des Unterwasserkraftwerks 20 befestigt.

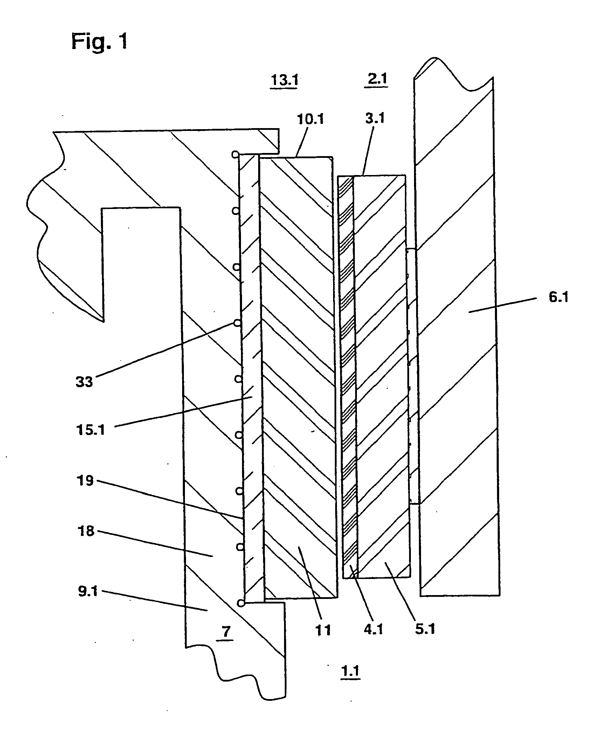

In Figur 1 ist ein vergrößerter Ausschnitt des Axiallagers 31.2 in Schnittansicht dargestellt. Dabei weist die erste Gleitlagerschale 2.1 eine Vielzahl von Gleitsegmenten 3.1 auf, von denen eines in Querschnittsansicht dargestellt ist. Die Gleitfläche des Gleitlagersegments 4.1 besteht vorliegend aus einem seewasserfesten Gleitlagerwerkstoff auf Polymerbasis. Die Gleitfläche des Gleitlagersegments 4.1 wird von einem Sockel 5.1 getragen und weist bevorzugt eine im Einzelnen nicht dargestellte Vorrichtung zur Lageeinstellung und Befestigung am Gehäuseteil 6.1 auf. Zusätzlich ist es möglich, das Gleitlagersegment 3.1 mit einer gewissen Bewegungsfähigkeit am Gehäuseteil 6.1 zu haltern.

Die zweite Gleitlagerschale 13.1 ist für das vorliegende Gleitlager 1.1 als Teil einer Spurscheibe 7 ausgebildet. Demgemäß ist der Tragkörper 9.1 ein Spurscheibenträger 18, in den eine Nut 19 eingedreht ist. Auf dem Grund der Nut 19 befindet sich eine Zwischenschicht 15.1, auf der das Ablaufelement 10.1 in Form einer Laufscheibe 11 angeordnet ist. Bevorzugt wird eine solche Materialstärke für die Zwischenschicht 15.1 gewählt, dass die Laufscheibe 11 zum Teil in die Nut 19 hineinragt, sodass zum einen eine verbesserte seitliche Führung der Laufscheibe 11 bewirkt wird und zum anderen zwischen dem Rand der Laufscheibe 11 und der angrenzenden Wandung der Nut 19 nur eine geringe Spaltbreite verbleibt, die so gewählt ist, dass die Zwischenschicht 15.1 in der Nut 19 auch im Zustand hoher plastischer Verformbarkeit weitgehend in der Nut gehalten wird.

Für eine erste, bevorzugte Ausgestaltung besteht die Zwischenschicht 15.1 aus einem Thermoplast. Dabei kann bevorzugt der Thermoplast aus der Gruppe gewählt werden, die durch Polymethylmethacrylat (PMMA), Polyamide (PA), Polycarbonat (PC), Polyethylenterephthalat (PET), Polyethylen (PE), Polypropylen (PP), Polystyrol (PS), Polyvinylchlorid und Acrylnitril-Butadien-Styrol (ABS) gebildet wird. Durch ein Aufheizen, das beispielsweise durch die in Figur 1 skizzierte elektrische Heizeinrichtung 33 bewirkt werden kann, wird der Plastomer in einen Zustand hinreichend großer plastischer Verformbarkeit überführt. In diesem Zustand, der bei der Erstmontage zur Justage oder im Falle eines Services für das erneute Einrichten des Ablaufelements 10.1 dient, wird die Lage des Ablaufelements 10.1 mit einer in den Figuren nicht im Einzelnen dargestellten Mess- und Führeinrichtung im Verhältnis zu den Ablaufflächen des weiteren Axiallagers 31.1 sowie der Radiallager 30.1, 30.2 ausgerichtet. Wird hierzu der Wellenstutzen 23 der umlaufenden Einheit präzise eingespannt und in eine Drehbewegung versetzt, kann mittels genau eingerichteter Anschläge eine Selbstzentrierung der Ablaufelemente der Gleitlager vorgenommen werden.

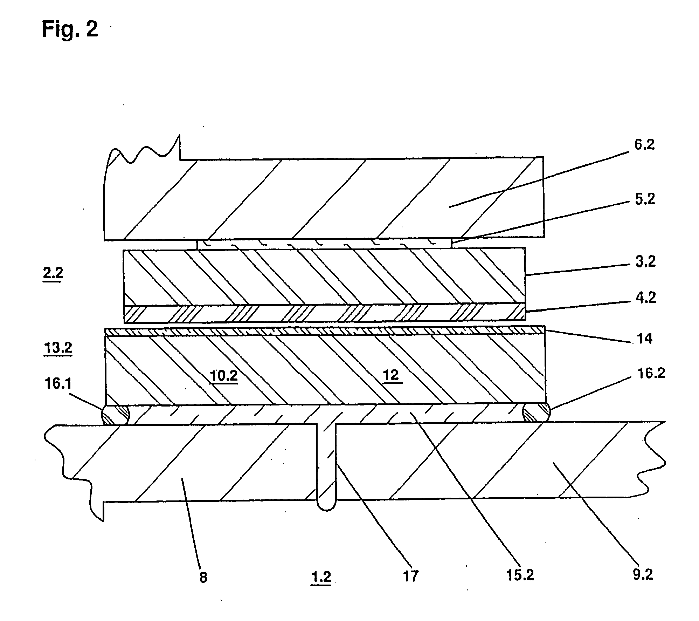

Figur 2 zeigt anhand eines vergrößert dargestellten Ausschnitts des Radiallagers 30.1 eine alternative Gestaltung der Erfindung. Dabei weist das gattungsgemäße Gleitlager 1.2 wiederum eine erste Lagerschale 2.2 auf, für die ein Gleitlagersegment 3.2 mit einem Sockel 5.2 und einer Gleitfläche des Gleitlagersegments 4.2 dargestellt ist, das an einem Gehäuseteil 6.2 befestigt wird.

Die zweite Gleitlagerschale 13.2 des erfindungsgemäßen Gleitlagers 1.2 weist ein separates Ablaufelement 10.2 in Form eines Laufrings 12 auf: Der Innendurchmesser des Laufrings 12 ist gegenüber dem Außendurchmesser der Welle 8, die für das vorliegende Ausführungsbeispiel den Tragkörper 9.2 darstellt, mit einem Übermaß gefertigt. Entsprechend kann der Laufring 12 zur Montage über die Welle 9 geführt werden. Der sich so bildende Zwischenraum zwischen dem Laufring 12 und der Welle 8 wird durch die Zwischenschicht 15.2 aufgefüllt. Hierzu werden die Lagerkomponenten auf Temperatur gebracht und ein im heißen Zustand fließfähiger Schmelzklebstoff wird über die Durchgangsöffnung 17 in der Welle 8 in den Zwischenraum eingefüllt. Als Basispolymer für den Schmelzklebstoff wird bevorzugt Polyamid, Polyethylen, amorphe Polyalphaolefine, Ethylenvinylacetat, Polyester-Elastomere, Polyurethan-Elastomere, Copolyamid-Elastomere oder eine Mischung dieser Polymere verwendet.

Bevorzugt werden elastische Dichtelemente 16.1, 16.2 in ringförmigen Spaltöffnungen des Zwischenraums zwischen dem Laufring 12 und der Welle vorgesehen, um ein Austreten des Schmelzklebstoffes zu verhindern. Nach dem Anbringen des Schmelzklebstoffs erfolgt die Justage des Laufrings 12 relativ zur Welle 8. Durch diese Maßnahme werden Unrundheiten und Zentrierungenauigkeiten soweit ausgeglichen, dass eine separate Nachbearbeitung des Laufrings nicht notwendig ist. Nachfolgend erfolgt die Abkühlung des Gleitlagers 1.2 zur Verfestigung des Schmelzklebstoffes.

In Figur 2 ist eine Ausgestaltung dargestellt, für die das Ablaufelement 10.2 eine Hartschicht 14 trägt. Diese kann ein glasartiges Material oder eine Keramik sein, die bevorzugt mittels eines Beschichtungsverfahrens auf dem Laufring 12 aufgebracht ist. Für eine solche Ausgestaltung ist es möglich, den Laufring aus einem gegenüber der Gleitfläche weicheren Material herzustellen. Auch die Verwendung eines nicht metallischen Werkstoff kommt in Frage. Denkbar ist auch eine gusstechnische Herstellung mittels eines Epoxidharzes, beispielsweise . mittels Epocast®. Des Weiteren besteht die Möglichkeit, das Ablaufelement 10.1, 10.2 so anzulegen, dass dies eine gewisse Elastizität zur Formanpassung aufweist. Die gewünschte präzise Kontur der Gleitfläche wird dann erst im Verfahrensschritt der Justage eingerichtet, bei dem die hinterlegte Zwischenschicht 15.1, 15.2 hinreichend plastisch verformbar ist. Mit abnehmender plastischer Verformbarkeit wird die so eingerichtete Kontur der Gleitfläche stabilisiert, sodass im Betrieb des Gleitlagers eine hinreichend belastbare und präzise Gleitfläche zur Verfügung steht. Dabei ist die Gleitfläche vorzugsweise nachjustierbar und erlaubt, beispielsweise über eine Spurscheibe, den Taumelschlag durch nicht präzise zueinander eingestellte umlaufende Komponenten dadurch zu verringern, dass die Zwischenschicht ein Mindestmaß an plastischer Verformbarkeit beibehält und so das Ablaufelement ständig einen Minimalabstand zum engsten Punkt der gegenüberliegenden Gleitfläche aufrechterhält.

Die Erfindung kann vom einem Fachmann im Rahmen der nachfolgenden Schutzansprüche variiert werden. Dabei besteht die Möglichkeit, dass das Verfahren zur Herstellung eines erfindungsgemäße Gleitlagers mehrere, unter Umständen zur Bildung einer Gleichfläche zusammengesetzte Ablaufelemente 10.1, 10.2 aufweist, die entsprechend eines einteiligen Ablaufelements über eine Zwischenschicht 15.1, 15.2 mit einer einstellbaren plastischen Verformbarkeit mit dem Tragkörper 9,1, 9.2 in Verbindung stehen und relativ zueinander justiert werden können.

### Bezugszeichenliste

- 1.1, 1.2: Gleitlager
- 2.1, 2.2: erste Gleitlagerschale
- 3.1, 3.2: Gleitlagersegment
- 4.1, 4.2: Gleitfläche des Gleitlagersegments
- 5.1, 5.2: Sockel
- 6.1, 6.2: Gehäuseteil
- 7: Spurscheibe
- 8: Welle
- 9.1,9.2: Tragkörper
- 10.1, 10.2: Ablaufelement
- 11, 11.1, 11.2: Laufscheibe
- 12, 12.1, 12.2: Laufring
- 13.1, 13.2: zweite Gleitlagerschale
- 14: Hartschicht
- 15.1, 15.2: Zwischenschicht
- 16.1, 16.2: Dichtelement
- 17: Durchgangsöffnung
- 18: Spurscheibenträger
- 19: Nut
- 20: Unterwasserkraftwerk
- 21: Wasserturbine
- 22: Haube
- 23: Wellenstutzen
- 24: Maschinengondel
- 25.1: erstes Segment
- 25.2: zweites Segment
- 25.3: drittes Segment
- 25.4: viertes Segment
- 26: elektrischer Generator
- 27: Stator
- 28: Läufer
- 29: Wellenteil
- 30.1, 30.2: Radiallager
- 31.1, 31.2: Axiallager
- 32: Stützstruktur
- 33: elektrische Heizeinrichtung
- 34: Rotationsachse

## Patentansprüche

1. Verfahren zur Herstellung eines Gleitlagers umfassend
1.1 wenigstens ein Gleitlagersegment (3.1, 3.2) zur Bildung einer ersten Gleitlagerschale (2.1, 2.2);
1.2 wenigstens ein Ablaufelement (10.1, 10.2) einer zweiten Gleitlagerschale (13.1, 13.2), das die Lagergegenfläche zum Gleitlagersegment (3.1, 3.2) bildet, wobei die Gleitfläche des Ablaufelements (10.1, 10.2) eine höhere Härte als die Gleitfläche des Gleitlagersegments (3.1, 3.2) aufweist;
1.3 einen Tragkörper (9.1, 9.2) für das Ablaufelement (10.1, 10.2);
1.4 eine zwischen dem Ablaufelement (10.1, 10.2) und dem Tragkörper (9.1, 9.2) angeordnete Zwischenschicht (15.1, 15.2), deren plastische Verformbarkeit durch die Temperaturführung einstellbar ist; **gekennzeichnet durch** die Verfahrensschritte
1.5 Erwärmen der Zwischenschicht (15.1, 15.2) über die beim Betrieb des Gleitlagers auftretenden Temperaturen zur Erhöhung der plastischen Verformbarkeit der Zwischenschicht (15.1, 15.2).
1.6 Justage des Ablaufelements (10.1, 10.2), wobei der Tragkörper (9.1, 9.2) mit der Zwischenschicht (15.1, 15.2) und dem Ablaufelement (10.1, 10.2) eingespannt und in eine Drehbewegung versetzt wird und gegen Anschläge einer Mess- und Führeinrichtung zur Selbstzentrierung des Ablaufelements (10.1, 10.2) geführt wird; und
1.7 nachfolgende Verringerung der plastische Verformbarkeit der Zwischenschicht (15.1, 15.2) **durch** eine Temperaturführung.

2. Verfahren zur Herstellung eines Gleitlagers nach Anspruch 1, **dadurch gekennzeichnet, dass** die Zwischenschicht (15.1, 15.2) einen Thermoplast oder einen Schmelzklebstoff umfasst.

3. Verfahren zur Herstellung eines Gleitlagers nach Anspruch 2, **dadurch gekennzeichnet, dass** der Thermoplast aus der Gruppe gewählt ist, die durch Polymethylmethacrylat (PMMA), Polyamide (PA), Polycarbonat (PC), Polyethylenterephthalat (PET), Polyethylen (PE), Polypropylen (PP), Polystyrol (PS), Polyvinylchlorid und Acrylnitril-Butadien-Styrol (ABS) gebildet wird.

4. Verfahren zur Herstellung eines Gleitlagers nach Anspruch 2, **dadurch gekennzeichnet, dass** das Basispolymer des Schmeizklebstoffs aus der Gruppe gewählt ist, die durch Polyamid, Polyethylen, amorphe Polyalphaolefine, Ethylenvinylacetat, Polyester-Elastomere, Polyurethan-Elastomere, Copolyamid-Elastomere gebildet wird.

5. Verfahren zur Herstellung eines Gleitlagers nach einem der voranstehenden Ansprüche, **dadurch gekennzeichnet, dass** im Tragkörper (9.1, 9.2) eine Nut (19) angelegt ist, in der die Zwischenschicht (15.1, 15.2) und ein Teil des Ablaufelements (10.1, 10.2) aufgenommen wird.

6. Verfahren zur Herstellung eines Gleitlagers nach einem der voranstehenden Ansprüche, **dadurch gekennzeichnet, dass** wenigstens ein Dichtelement (16.1, 16.2) vorgesehen ist, dass dem Austritt der Zwischenschicht (15.1, 15.2) aus einem Spalt zwischen dem Ablaufelement (10.1, 10.2) und dem Tragkörper (9.1, 9.2) entgegenwirkt.

7. Verfahren zur Herstellung eines Gleitlagers nach einem der voranstehenden Ansprüche, **dadurch gekennzeichnet, dass** der Tragkörper (9.1, 9.2) Teil eines Spurscheibenträgers (18) ist und das Ablaufelement (10.1, 10.2) eine einer Spurscheibe (7) zugeordnete Laufscheibe (11, 11.1, 11.2) ist.

8. Verfahren zur Herstellung eines Gleitlagers nach einem der voranstehenden Ansprüche, **dadurch gekennzeichnet, dass** das Ablaufelement (10.1, 10.2) aus einem metallischen Werkstoff, vorzugsweise aus Stahl, oder Keramik oder Glas besteht oder eine Auflage aus einem solchen Material trägt.

9. Verfahren zur Herstellung eines Gleitlagers nach einem der voranstehenden Ansprüche, **dadurch gekennzeichnet, dass** das Ablaufelement (10.1, 10.2) auf der Gleitfläche eine Beschichtung aus einem Hartwerkstoff, vorzugsweise aus einem metallischen Nitrid oder eine Keramik, aufweist.

10. Verfahren zur Herstellung eines Gleitlagers nach einem der voranstehenden Ansprüche, **dadurch gekennzeichnet, dass** das Gleitlagersegment (3.1, 3.2) eine Gleitfläche (4.1, 4.2) aus einem Polymermaterial aufweist.

## Claims

1. A method for producing a plain bearing comprising
1.1 at least one plain bearing segment (3.1, 3.2) for forming a first plain bearing shell (2.1, 2.2);
1.2 at least one running element (10.1, 10.2) of a second bearing shell (13.1, 13.2), which forms the bearing counter surface to the plain bearing segment (3.1, 3.2), wherein the sliding face of the running element (10.1, 10.2) has a greater hardness than the sliding face of the plain bearing segment (3.1, 3.2);
1.3 a support body (9.1, 9.2) for the running element (10.1, 10.2);
1.4 an intermediate layer (15.1, 15.2), which is arranged between the running element (10.1, 10.2) and the support body (9.1, 9.2), and the plastic deformability of which is adjustable by the temperature control; **characterized by** the following method steps:
1.5 heating the intermediate layer (15.1, 15.2) above the temperatures occurring during operation of the plain bearing to increase the plastic deformability of the intermediate layer (15.1, 15.2);
1.6 adjusting the running element (10.1, 10.2), wherein the support body (9.1, 9.2) is chucked with the intermediate layer (15.1, 15.2) and the running element (10.1, 10.2) and set into a rotational movement and guided against stops of a measuring and guiding device for self-centering of the running element (10.1, 10.2); and
1.7 subsequently decreasing the plastic deformability of the intermediate layer (15.1, 15.2) by a temperature control.

2. The method for producing a plain bearing according to Claim 1, **characterized in that** the intermediate layer (15.1, 15.2) comprises a thermoplastic material or a hot melt adhesive.

3. The method for producing a plain bearing according to Claim 2, **characterized in that** the thermoplastic material is selected from the group which is formed by polymethyl methacrylate (PMMA), polyamide (PA), polycarbonate (PC), polyethylene terephthalate (PET), polyethylene (PE), polypropylene (PP), polystyrene (PS), polyvinylchloride, and acrylonitrile butadiene styrene (ABS).

4. The method for producing a plain bearing according to Claim 2, **characterized in that** the base polymer of the hot melt adhesive is selected from the group which is formed by polyamide, polyethylene, amorphous polyalphaolefins, ethylene vinyl acetate, polyester elastomeric materials, polyurethane elastomeric materials, and copolyamide elastomeric materials.

5. The method for producing a plain bearing according to one of the preceding claims, **characterized in that** a groove (19), in which the intermediate layer (15.1, 15.2) and a part of the running element (10.1, 10.2) are accommodated, is applied in the support body (9.1, 9.2).

6. The method for producing a plain bearing according to one of the preceding claims, **characterized in that** at least one sealing element (16.1, 16.2) is provided, which counteracts the escape of the intermediate layer (15.1, 15.2) from a gap between the running element (10.1, 10.2) and the support body (9.1, 9.2).

7. The method for producing a plain bearing according to one of the preceding claims, **characterized in that** the support body (9.1, 9.2) is part of a track disc carrier (18) and the running element (10.1, 10.2) is a pulley (11, 11.1, 11.2) assigned to a track disc (7).

8. The method for producing a plain bearing according to one of the preceding claims, **characterized in that** the running element (10.1, 10.2) consists of a metallic material, preferably of steel, or of ceramic or glass or carries an overlay made of such a material.

9. The method for producing a plain bearing according to one of the preceding claims, **characterized in that** the running element (10.1, 10.2) has on the sliding face a coating made of a hard material, preferably made of a metallic nitride or a ceramic.

10. The method for producing a plain bearing according to one of the preceding claims, **characterized in that** the plain bearing segment (3.1, 3.2) has a sliding face (4.1, 4.2) made of a polymer material.

## Revendications

1. Procédé de fabrication d'un palier antifriction comportant
1.1 Au moins un segment de palier antifriction (3.1, 3.2) formant une coque de palier antifriction (2.1, 2.2)
1.2 Au moins un élément d'écoulement (10.1, 10.2) d'une seconde coque de palier antifriction (13.1, 13.2) formant la surface de palier opposée au segment de palier antifriction (3.1, 3.2), sachant que la surface antifriction de l'élément d'écoulement (10.1, 10.2) présente une dureté supérieure à la surface antifriction du segment de palier antifriction (3.1, 3.2) ;
1.3 Un corps porteur (9.1, 9.2) pour l'élément d'écoulement (10.1, 10.2) ;
1.4 Une couche intermédiaire (15.1, 15.2) placée entre l'élément d'écoulement (10.1, 10.2) et le corps porteur (9.1, 9.2) et dont la déformabilité plastique peut être réglée en fonction de la température ;
**Caractérisé par** les étapes de procédé suivantes
1.5 Réchauffement de la couche intermédiaire (15.1, 15.2) par la température obtenue lors de l'actionnement du palier antifriction pour augmenter la déformabilité plastique de la couche intermédiaire (15.1, 15.2).
1.6 Le réglage de l'élément d'écoulement (10.1, 10.2), sachant que le corps porteur (9.1, 9.2) est tendu avec la couche intermédiaire (15.1, 15.2) et l'élément d'écoulement (10.1, 10.2) et mis en rotation et amené contre les butées d'un dispositif de mesure et de guidage pour le centrage automatique de l'élément d'écoulement (10.1, 10.2) ; et
1.7 La réduction consécutive de la déformabilité plastique de la couche intermédiaire (15.1, 15.2) par réglage de la température.

2. Procédé de fabrication d'un palier antifriction selon la revendication 1, **caractérisé en ce que** la couche intermédiaire (15.1, 15.2) englobe un thermoplaste ou une colle fusible.

3. Procédé de fabrication d'un palier antifriction selon la revendication 2, **caractérisé en ce que** le thermoplaste est sélectionné dans le groupe formé par le polyméthacrylate de méthyle (PMMA), les polyamides (PA), le polycarbonate (PC), le polystyrène (PS), le chlorure de polyvinyle et l'acrylonitrile-butadiène-styrène (ABS).

4. Procédé de fabrication d'un palier antifriction selon la revendication 2, **caractérisé en ce que** le polymère de base de la colle fusible est sélectionné dans le groupe composé du polyamide, du polyéthylène, du polyalphaoléfine amorphe, d'éthylène-acétate de vinyle, d'élastomères polyester, d'élastomère polyuréthane, d'élastomères copolyamide.

5. Procédé de fabrication d'un palier antifriction selon l'une des revendications précédentes, **caractérisé en ce qu'**une encoche (19) est formée dans le corps porteur (9.1, 9.2) et dans laquelle la couche intermédiaire (15.1, 15.2) et une partie de l'élément d'écoulement (10.1, 10.2) sont réceptionnés.

6. Procédé de fabrication d'un palier antifriction selon l'une des revendications précédentes, **caractérisé en ce qu'**il est prévu au moins un élément d'étanchéité (16.1, 16.2) contrecarrant la résurgence de la couche intermédiaire (15.1, 15.2) d'une fente entre l'élément d'écoulement (10.1, 10.2) et le corps porteur (9.1, 9.2).

7. Procédé de fabrication d'un palier antifriction selon l'une des revendications précédentes, **caractérisé en ce que** le corps porteur (9.1, 9.2) constitue une partie d'un support de disque de guidage (18) et **en ce que** l'élément d'écoulement (10.1, 10.2) est un disque aileté (11, 11.1, 11.2) affecté au disque de guidage (7).

8. Procédé de fabrication d'un palier antifriction selon l'une des revendications précédentes, **caractérisé en ce que** l'élément d'écoulement (10.1, 10.2) est fabriqué en matériau métallique, de préférence en acier ou en céramique ou en verre ou qu'il porte une couche fabriquée en un tel matériau.

9. Procédé de fabrication d'un palier antifriction selon l'une des revendications précédentes, **caractérisé en ce que** l'élément d'écoulement (10.1, 10.2) présente une enduction en matériau dur sur la surface antifriction, de préférence en nitrure métallique ou une céramique.

10. Procédé de fabrication d'un palier antifriction selon l'une des revendications précédentes, **caractérisé en ce que** le segment de palier antifriction (3.1, 3.2) présente une surface antifriction (4.1, 4.2) en matériau polymère.
